# EUROPEAN PATENT SPECIFICATION

(11) **EP 1 334 077 B1**
(45) Date of publication and mention of the grant of the patent: **04.08.2004**
(21) Application number: 01978460.2
(22) Date of filing: 25.10.2001
(51) Int. Cl.: C04B 41/63

(54) **WATERPROOFING PASTE**
HYDROPHOBIERPASTE
PATE D'ETANCHEITE

(30) Priority: 17.11.2000 IT PD20000259
(43) Date of publication of application: 13.08.2003
(73) Proprietor: Isolcem Italia S.r.l., 35010 Loreggia (IT)
(72) Inventor: MASON, Maurizio, I-35010 Loreggia (IT)
(74) Representative: Robba, Pierpaolo
(86) International application number: PCT/EP2001/012411
(87) International publication number: WO 2002/040425

(56) References cited:
- EP-A- 0 505 650
- EP-A- 0 781 732
- DE-A- 4 416 836
- DATABASE CA [Online] CHEMICAL ABSTRACTS SERVICE, COLUMBUS, OHIO, US; KAPLAN, MILOS ET AL: "Material for elastic coatings on building structure surfaces" retrieved from STN Database accession no. 123:207186 XP002189020 & CZ 279 266 B (CZECH REP.) 15 March 1995 (1995-03-15)
- DATABASE WPI Section Ch, Week 197912 Derwent Publications Ltd., London, GB; Class A14, AN 1979-22716B XP002189021 & JP 54 018858 A (JAPAN EXLAN CO LTD), 13 February 1979 (1979-02-13)

## Description

The present invention concerns a waterproofing paste, in particular for coating wall surfaces in foundations.

It is known that, in building industry, the foundation walls against which the surrounding ground is leant are protected, before the filling up, from the direct contact with ground to prevent said walls from being affected by humidity or water possibly impregnating the ground.

To this aim, waterproof films or sheaths adhering to the walls are provided, or paints or varnishes creating a waterproof film are applied on said walls.

Document CZ 279 266 B discloses a composition for use in a water-resistant coating of building surfaces, said composition comprising rubber particles and a binder being a crosslinkable aqueous acrylate dispersion.

In both cases, the protection must exhibit no discontinuity, since any interstice, even of small size, or any more or less diffused porosity would make the intervention useless.

In the first case, in which films or sheaths are used, apart from the costs of the films or sheaths themselves, the problem arises of the costs needed for their application and/or their maintenance in position before the filling up. Moreover, also the additional costs for the measures to be taken to ensure continuity between the different parts positioned with adjoining or superimposed ends should be included.

In the second case, in which paints or varnishes are used, the coating must be applied as a single-film layer to prevent trickling. Thus, a plurality of subsequent coats is needed for a complete covering. The system is expensive because labour cost doubles or triples if two or three coats are required. The costs to be incurred moreover depend on the amount of material being applied.

The final thickness is limited to the sum of the thicknesses of the individual films applied.

Another problem that is decisive for the good quality of the interventions is related with the ability of the protecting materials (films, sheaths, paint or varnish layers) to resist to deterioration that could result in discontinuities upon the filling up.

It is known that, at present, filling up near foundations is carried out by mechanical means and that the filling material is not soft soil, free from foreign bodies, but it consists of the previously removed earth combined with greater or smaller amounts of brick fragments, concrete pieces resulting from demolitions and so on.

Thus, to ensure that no damage occurs to the protecting materials applied to the walls, panels (such as polystyrene panels or the like) should be applied before the filling up to prevent contact of said protecting materials with the filling materials. Moreover, hard components of bigger or lesser size and with more or less sharp edges should be removed. It is easy to understand how this could be expensive.

The above drawbacks are obviated by using the paste according to claim 1 of the present invention, which is based on polymerisable resins loaded with plastic grains.

The paste has a mortar-like consistency, it may be applied by means of a spatula or a trowel and it does not trickle along the surfaces of vertical walls.

The paste consists of suitable acrylic resins, generally with an aqueous vehicle and with a single component, that can become polymerised in air and are mixed with plasticising resins generally of monomer type, and plastic grains, such as PVC or rubber grains or the like, are dispersed therein.

The grain load (the amount of which is variable and preferably is in the range 5% to 80%) is determined every time depending on the requirements of the individual cases.

The paste is applied in a thick layer on the walls to be coated, and a self-levelling continuity is obtained even where the anchoring surface has irregularities of any kind.

The anchoring does not require any primer, provided however that friable or powder portions as well as non-anchored foreign bodies are removed.

If necessary, several layers of the paste made in accordance with the invention could be applied.

When polymerisation is complete, the applied paste forms a continuous waterproof sheath with high resistance to tensile stresses and to breaking and with a good degree of flexibility. It can be said that the sheath forms an "overcoat" protection in respect of the surfaces to which it is applied.

As described above, the elastic sheath is manufactured with rather limited costs as far as both the material (notwithstanding the relatively great thicknesses) and the labour are concerned.

A decisive factor is that, when using said sheath according to the invention, the filling up could take place without need for excessive precautions and expedients, so that the costs of the filling up lie within the normal range.

The invention is shown by way of example in the accompanying drawings, in which:

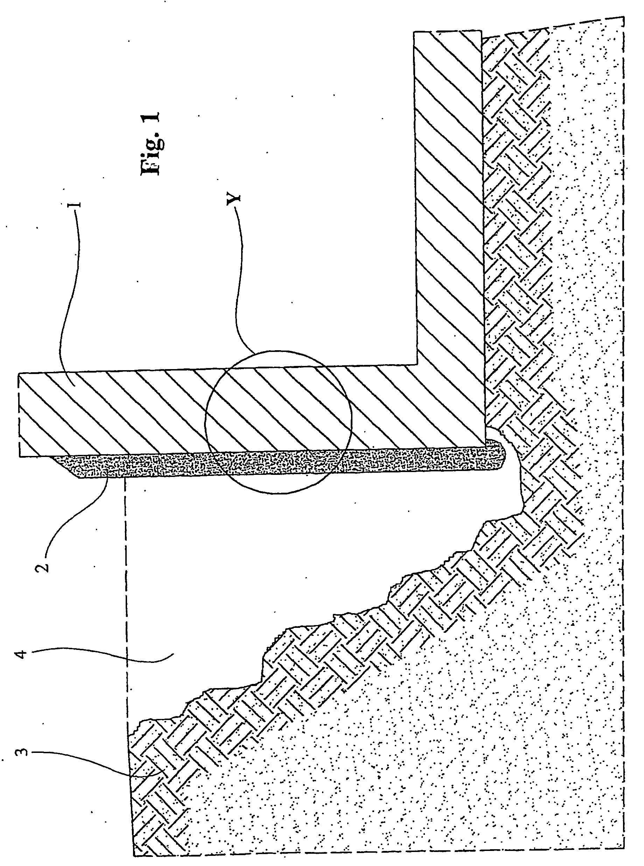

- Fig. 1 schematically shows a portion of a wall structure, having applied thereto the waterproofing paste of the invention, before the filling up;
- Fig. 2 schematically shows detail Y of Fig. 1 in enlarged scale; and
- Fig. 3 is a view similar to Fig. 1, showing the coated wall structure after the filling up.

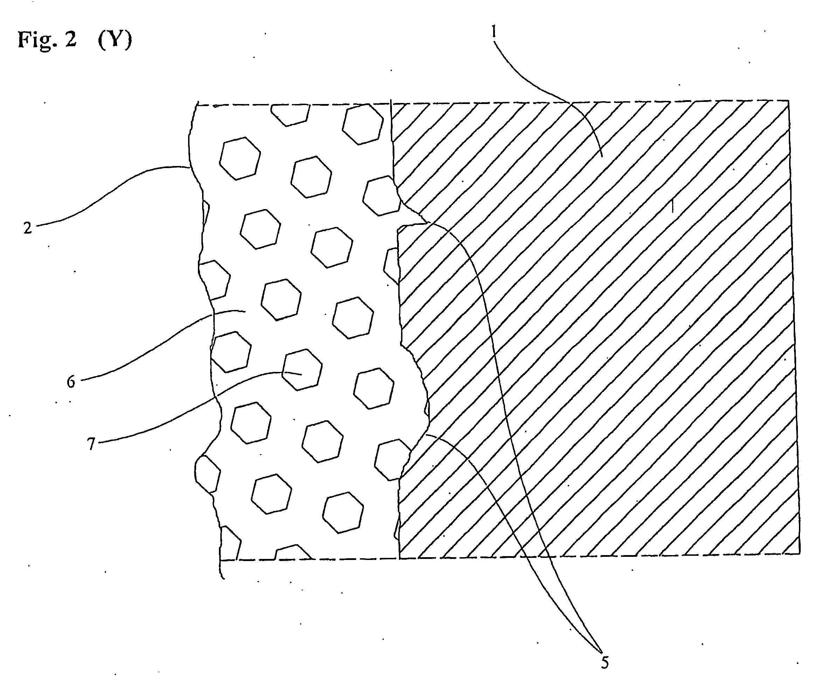

Referring to the drawings, there is shown a part of building foundations or the like, where a wall structure 1 is coated with a waterproof coating 2 made of the paste according to the invention. As shown in Fig. 2, coating 2 comprises a matrix 6 obtained from air-polymerisable resins, in particular acrylic resins, in which grains 7 are dispersed. Preferably said grains are plastic grains.

The paste for coating 2 is applied with a certain advance with respect to the filling up, in order it is completely polymerised when filling up takes place. The paste is moreover applied to a substantial thickness and it penetrates into recesses 5 of wall 1, thereby forming a self-levelling coating.

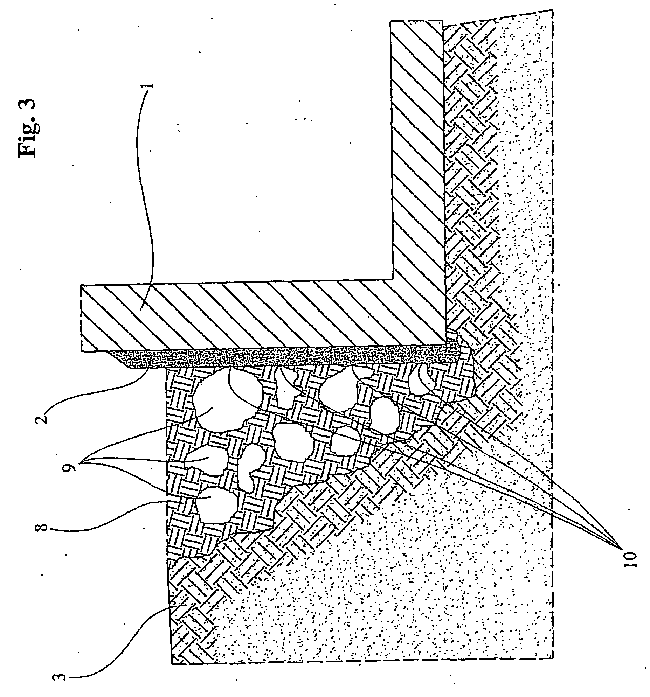

During the filling up, space 4 between coated wall structure 1 and surrounding ground 3 is filled with earth material 8 into which pieces 9 of hard and sharp-cornered materials (e. g. brick or concrete fragments) are embodied. During filling up, said pieces 9 of hard and sharp-cornered materials may arrive in contact with waterproofing coating 2 on wall 1, as shown at locations 10. Yet the contact does not give rise to discontinuity or abrasion or tearing in waterproofing paste 2, as clearly shown in Fig. 3. An essential feature of waterproofing paste 2 according to the invention is just its ability to resist to such hard and sharp-cornered materials.

Thus for instance, the paste made in accordance with the invention can be used not only for forming waterproof coating on walls in foundations, whether subjected to filling up or not, but it can be used also for coating of surfaces in general, not only in masonry but also wooden or metallic or plastic surfaces. The paste could act also as a plaster or a paint. In such case it might have any of a wide variety of colours, and this is achieved by a suitable choice of the resins and by the possible addition of pigments.

## Claims

1. A waterproofing paste comprising:
- polymerisable acrylic resins (6) using an aqueous solvent and being polymerisable in air,
- plasticising resins for increasing the paste density, said plasticising resins using an aqueous solvent,
said polymerisable resins (6) and plasticising resins being loaded with both plastic grains (7) and non-plastic grains.

2. A waterproofing paste as claimed in claim 1, **characterised in that** said plasticising resins are generally of monomer type.

3. A waterproofing paste as claimed in claim 1, **characterised in that** said plastic grains (7) are PVC or rubber grains.

4. A waterproofing paste as claimed in any preceding claim, **characterised in that**, once resin polymerisation is complete, it forms a resilient sheath that is resistant to tensile stresses, shocks, abrasion and tearing.

5. A waterproofing paste as claimed in any preceding claim, **characterised in that** it is a coloured paste.

6. A waterproofing paste as claimed in claim 5, **characterised in that** it includes coloured resins (6) and/or pigments added to the resins (6).

7. A method for coating wall surfaces (1) in building foundations, before filling up, comprising the steps of:
- providing polymerisable acrylic resins (6) using an aqueous solvent and being polymerisable in air;
- providing plasticising resins for increasing the paste density, said plasticising resins using an aqueous solvent;
- providing an amount of plastic grains (7);
- providing an amount of non-plastic grains;
- loading and mixing said polymerisable resins (6) and said plasticising resins with both said plastic grains (7) and said non-plastic grains, thus obtaining a paste having a mortar-like consistency;
- covering said wall surfaces (1) in building foundations by applying said paste by means of a spatula or a trowel;
- letting said paste applied on said wall surfaces (1) to become polymerised in air, thus obtaining a continuous waterproof sheath having high resistance to tensile stresses and breakings as well as good flexibility.

## Patentansprüche

1. Eine Hydrophobierpaste, die folgendes umfaßt:
- polymerisierbare Acrylharze (6) unter Verwendung eines wäßrigen Lösungsmittels und an der Luft polymerisierbar.
- plastifizierende Harze zur Steigerung der Dichte der Paste, wobei jene plastifizierenden Harze ein wäßriges Lösungsmittel enthalten,
und jene polymerisierbaren Harze (6) und plastifizierenden Harze sowohl mit Plastikkörnung (7) als auch mit nichtplastischer Körnung angereichert werden können.

2. Hydrophobierpaste nach Anspruch 1,
**dadurch gekennzeichnet, daß** jene plastifizierenden Harze im Allgemeinen von der Art der Monomere sind.

3. Hydrophobierpaste nach Anspruch 1,
**dadurch gekennzeichnet, daß** jene Plastikkörnung (7) aus PVC- oder Gummikörnung besteht.

4. Hydrophobierpaste nach einem der vorhergehenden Ansprüche,
**dadurch gekennzeichnet, daß**, wenn die Polymerisation des Harzes einmal erfolgt ist, dieses einen elastischen Mantel bildet, der gegen Zugspannungen, Stöße, Abrieb und Rißbildung widerstandsfähig ist.

5. Hydrophobierpaste nach einem der vorhergehenden Ansprüche,
**dadurch gekennzeichnet, daß** sie eine farbige Paste ist.

6. Hydrophobierpaste nach Anspruch 5,
**dadurch gekennzeichnet, daß** sie farbige Harze (6) und/oder den Harzen (6) beigefügte Pigmente beinhaltet.

7. Verfahren zum Beschichten von Wandoberflächen (1) von Gebäudegründungen vor dem Auffüllen, das folgende Schritte umfaßt:
Beschaffen polymerisierbarer Acrylharze (6) unter Verwendung eines wäßrigen Lösungsmittels sowie an der Luft polymerisierbar;
Beschaffen plastifizierender Harze zur Steigerung der Dichtheit der Paste, wobei jene plastifizierenden Harze ein wäßriges Lösungsmittel enthalten;
Beschaffen einer Menge an Plastikkörnung (7);
Beschaffen einer Menge an nichtplastischer Körnung;
Bereitstellen und Mischen jener polymerisierbaren Harze (6) und jener plastifizierenden Harze sowohl mit jenen plastischen Körnungen (7) als auch mit jenen nichtplastischen Körnungen und demgemäß Erzeugen einer Paste mit mörtelähnlicher Konsistenz;
Überziehen jener Wandoberflächen (1) in Gebäudegründungen durch Einsatz jener Paste mittels Spachtel oder Kelle;
Anhaften jener Paste an jenen Wandoberflächen (1) zum Polymerisieren an der Luft und demgemäß Erzeugung eines ununterbrochenen wasserdichten Mantels mit hoher Widerstandsfähigkeit gegen Zugspannungen und Brüche ebenso wie mit geeigneter Elastizität.

## Revendications

1. Pâte étanche à l'eau comprenant :
- des résines acryliques polymérisables (6) utilisant un solvant aqueux et pouvant se polymériser à l'air,
des résines plastifiantes servant à augmenter la densité de la pâte, lesdites résines plastifiantes utilisant un solvant aqueux,
lesdites résines polymérisables (6) et lesdites résines plastifiantes étant chargées à la fois de grains de matière plastique (7) et de grains sans matière plastique.

2. Pâte étanche à l'eau selon la revendication 1, **caractérisée en ce que** lesdites résines plastifiantes sont généralement de type monomère.

3. Pâte étanche à l'eau selon la revendication 1, **caractérisée en ce que** lesdits grains de matière plastique (7) sont des grains de PVC ou des grains de caoutchouc.

4. Pâte étanche à l'eau selon l'une quelconque des revendications précédentes, **caractérisée en ce que**, une fois que la polymérisation de résine est achevée, elle forme une gaine élastique qui est résistante aux contraintes par tension, aux chocs, à l'abrasion et à l'usure.

5. Pâte étanche à l'eau selon l'une quelconque des revendications précédentes, **caractérisée en ce qu'**elle est une pâte colorée.

6. Pâte étanche à l'eau selon la revendication 5, **caractérisée en ce qu'**elle comprend des résines colorées (6) et/ou des pigments ajoutés aux résines (6).

7. Procédé de revêtement de surfaces de mur (1) dans des fondations d'immeubles, avant remplissage, comportant les étapes consistant à :
- fournir des résines acryliques polymérisables (6) utilisant un solvant aqueux et pouvant se polymériser à l'air ;
- fournir des résines plastifiantes pour augmenter la densité de la pâte, lesdites résines plastifiantes utilisant un solvant aqueux ;
- fournir une quantité de grains de matière plastique (7) ;
- fournir une quantité de grains sans matière plastique ;
- charger et mélanger lesdites résines polymérisables (6) et lesdites résines plastifiantes avec, à la fois, lesdits grains de matière plastique (7) et lesdits grains sans matière plastique, obtenant ainsi une pâte présentant une consistance semblable au mortier;
- couvrir lesdites surfaces de mur (1) dans des fondations d'immeubles en appliquant ladite pâte au moyen d'une spatule ou d'une truelle ;
- laisser ladite pâte appliquée sur lesdites surfaces de mur (1) se polymériser à l'air, pour obtenir ainsi une gaine continue étanche à l'eau présentant une résistance élevée aux contraintes par tension et aux ruptures, de même qu'une bonne souplesse.
